# EUROPEAN PATENT APPLICATION

(11) **EP 4 759 143 A1**
(43) Date of publication of application: **17.06.2026**
(21) Application number: 25223131.1
(22) Date of filing: 12.12.2025
(51) Int. Cl.: A23D 7/00, A23D 7/005, A23D 9/007, A23P 30/40

(54) **OLIVE OIL BUTTER AND METHOD FOR ITS PREPARATION**

(30) Priority: 16.12.2024 IT 202400028554
(71) Applicant: Goller, Rino, 38050 Torcegno TN (IT); Ianniello, Ivan, 25010 Limone sul Garda BS (IT)
(72) Inventor: Goller, Rino, 38050 Torcegno TN (IT); Ianniello, Ivan, 25010 Limone sul Garda BS (IT)
(74) Representative: Longoni, Alessandra

(57) **Abstract**

A food product is described that is based on olive oil, preferably extra virgin olive oil, and butter of animal origin, preferably cow's milk butter, free of additional emulsifiers, thickeners, and/or stabilizers, and a process for its preparation by simultaneous sonication and mixing, followed by homogenization.

## Description

### Technical field

The present invention relates to the food industry and, more specifically, to a food product based on butter and olive oil, hereinafter also referred to as "olive oil butter," and to a method for its preparation.

### Prior art

Butter as we know is a food substance consisting of the fats contained in cow's milk, or also goat's, sheep's, reindeer, or other species' milk. It is obtained by skimming (or separating the tiny droplets of fat emulsified in the milk) and churning, whereby the cream is transformed into butter. It has a solid consistency and a very high calorie content. Unfortunately, its composition is largely saturated fat, specifically 48.78% saturated fat and only 26.47% unsaturated fat, which is healthier.

The composition of olive oil is completely different, with 80.18% unsaturated fat and only 14.46% saturated fat.

However, for historical, culinary, and ease-of-use reasons, butter is an essential component of our diet.

Therefore, being able to obtain a product with characteristics combining the two products, butter and olive oil, would be very useful both for ease and convenience of use and for the healthiness of the product.

Unfortunately, olive oil and butter do not combine naturally, and it is not possible to create a pat of a combination of the two products by simply mixing them.

Attempts have been made (see, for example, Mayumi Silva et al., "Ultrasound-assisted formation of double emulsions stabilized by casein-whey protein mixtures," Food Hydrocolloids, vol. 109, Dec. 2020, 106143) using milk proteins and seed oils, failing to obtain a solid product and obtaining a spreadable cream.

US 6113971 entitled *"Olive oil butter"* describes a butter with a solid or spreadable consistency at room temperature prepared by controlled hydrogenation of olive oil or by other chemical processes such as hydroxylation and hydration.

EP 1 688 044 and EP 2 263 473 entitled *"A butter-like dairy spread and method for production"* describe a spreadable cream based on butter and vegetable fat, and optionally also vegetable oil, prepared by mixing. The vegetable fat has a solid content of 30-45% at 20°C.

EP 1 279 338 entitled *"Use of olive oil for the production of margarines, butters, fats, wheys, creams, chocolate and the like"* reports that olive oil can be used for the production of butter by incorporating up to 65% of it in the production of butter. However, the process for preparing this "olive oil butter" is not described.

Italian patent application no. 102018000001007 entitled *"Method for preparing a food product based on oil and vegetable butter"* describes a method for preparing vegetable butter using butter of vegetable origin (cocoa butter, pistachio butter, peanut butter, nut butter, hazelnut butter, and mixtures thereof) and olive oil by mixing. None of the citd documents therefore describes the preparation of an "olive oil butter" consisting of cow's milk butter or other animal butter and olive oil, without other vegetable fats.

Even commercial products do not contain both animal butter and olive oil.

For example, Granarolo light butter is made from butter, water, anhydrous butter, modified corn starch, E471, E472C, E476, concentrated whey, and potassium sorbate as a preservative; Prealpi butter is made from butter (50%) and palm oil (40%) as well as water and milk proteins. The product marketed under the Reolì brand consists of olive oil, cocoa butter, various flavorings, and thickeners.

The problem therefore remains of how to mix animal butter and olive oil to make "olive oil butter" without using emulsifiers and/or thickeners or other additives that promote emulsification and/or thickening, such as solid vegetable fats, whey, stabilizers such as cocoa butter or corn starch, E471, etc., gelling agents such as xanthan gum, agar agar, etc..

### Description of the Invention

The invention is defined by the attached claims.

We have now developed a food product based on olive oil and butter that is solid but can also have the consistency of a spreadable cream.

In particular, the product object of the present invention consists of 10-50% by weight of olive oil and 30-55% by weight of butter, with the optional addition of other natural ingredients, selected among water, fruit jam or marmalade, lard, table salt, sugar, lemon juice or other citrus juices, and natural flavorings, for the sole purpose of varying the taste and/or consistency of the final product.

Regardless of the type and quantity of ingredients added, the final product does not contain any additional emulsifiers other than those naturally present in the ingredients themselves, nor does it contain thickeners and/or stabilizers or other additives that promote emulsion and/or thickening.

Non-limiting examples of flavorings are rosemary, sage, medicinal herbs, citrus peel, cocoa, vanilla, spices, and food drugs.

A preferred form of the food product object of the present invention is a mixture (emulsion) of animal butter and olive oil in equal parts by weight.

The animal butter may be butter made from cow's milk, goat's milk, reindeer milk, sheep's milk, or other types of animal milk commonly used in the food industry. Preferably, also for practical reasons, cow's milk butter is used.

The olive oil may be any type of olive oil for food use, preferably virgin or extra virgin olive oil, even more preferably extra virgin olive oil.

Specific non-limiting examples of the food product according to the present invention are (% w/w):
Composition 1

| | |
|---|---|
| Olive oil | 50% |
| Butter | 50% |

Composition 2

| | |
|---|---|
| Olive oil | 20% |
| Butter | 40% |
| Jam | 40% |

Composition 3

| | |
|---|---|
| Olive oil | 10% |
| Butter | 30% |
| Water | 20% |
| Jam | 39.5% |
| Flavorings | 0.5% |

Composition 4

| | |
|---|---|
| Olive oil | 10% |
| Butter | 30% |
| Water | 20% |
| Sugar | 39% |
| Flavorings | 1% |

Composition 5

| | |
|---|---|
| Olive oil | 49% |
| Butter | 49% |
| Flavorings | 2% |

Composition 6

| | |
|---|---|
| Olive oil | 40% |
| Butter | 55% |
| Lemon juice | 4.7% |
| Salt | 0.3% |

Composition 7

| | |
|---|---|
| Olive oil | 30% |
| Butter | 50% |
| Lard | 10% |
| Salt | 0.3% |
| Water and flavorings | 9.7% |

The main feature that differentiates the product object of the present invention from similar products on the market (e.g., Granarolo light butter, Prealpi butter, and Reolì butter) is the absence of vegetable fats other than olive oil and the absence of additives such as emulsifiers, stabilizers, whey, thickeners, and, more generally, additives that promote emulsification and/or thickening. The product object of the present invention does not require elements to stabilize its structure or to aid or accelerate the process.

In fact, thickeners, emulsifiers, and stabilizers are not necessary because it is the physical preparation process that allows the emulsion to be stable in the desired form, i.e., with the solid consistency of a pat of butter or the creamy consistency of a spreadable cream.

No vegetable oils or fats other than olive oil are added, such as palm oil and cocoa butter, which are solid at room temperature, nor are other saturated fats, which are also generally solid at room temperature.

The physical process used to prepare the product object of the present invention allows a stable product to be obtained without the addition of chemical additives.

The only optional additive that may be used in the product of the invention is a natural food preservative, such as potassium sorbate, to increase the shelf life of the product. The process for preparing the "olive oil butter" food product involves the simultaneous sonication and mixing of the components (butter and olive oil) until the mixture reaches a temperature of approximately 30°C, followed by homogenization.

The product preparation process is a further object of the present invention and makes it possible to overcome various difficulties arising from the incompatibility of the two essential and characterizing components, olive oil and butter of animal origin, which do not coexist naturally in a stable form.

The two components have different surface tensions. Surface tension is the force that tends to keep the molecules of a liquid together. Butter has a relatively low surface tension, while olive oil has a very high surface tension. This difference makes it difficult for the two components to coexist in a stable mixture.

The viscosities of the two components are also different. Viscosity is the resistance of a liquid to flow. Butter has a relatively low viscosity, while olive oil has a very high viscosity. This makes it difficult to mix the two components evenly.

From a chemical point of view, the differences also make it difficult to stabilize the mixture of the two components. Butter contains proteins and lactose that can interfere with the emulsion. Olive oil contains polyphenols that can also interfere with the emulsion.

The optional addition of jam containing pectin, acids, and sugar makes the stability of the mixture even more difficult.

The process of preparing the food product object of the present invention is characterized by the use of ultrasound (sonication).

Without wishing to be bound by any theory, the inventors believe that the application of ultrasound activates the cavitation process so that the ingredients in the sonication tank heat up evenly. In addition, the small gas or vapor molecules that form and then implode within the ingredients break down the macromolecules, reducing them evenly.

The optimal temperature to be reached in the sonication tank is approximately 30°C. The sonication tank is generally a metal vessel to which ultrasonic emitters are attached. Preferably, the ultrasonic emitters emit ultrasound at a frequency of 40 kHz with a power of 60 watts.

The skilled person in the field will understand that the number of emitters to be used is proportional to the size of the sonication tank. For example, for a 3-liter tank, 3 emitters will be used, while for a 30-liter tank, 15-20 emitters will be used. The relationship is therefore not linear and will also depend on the type of emitter.

During sonication, the mixture of ingredients in the sonication tank is kept under stirring by a mixer set at low speed, generally not exceeding 10 revolutions per minute. At the end of the simultaneous sonication and mixing phase, i.e., when the mixture has reached the desired temperature, the contents of the tank are homogenized using a high-speed mixer (e.g., blender with booster). Indicatively, the homogenization speed is approximately 4000 revolutions per minute.

Homogenization further reduces the size of the molecules, resulting in a mixture with uniform density that is stable and resistant to separation.

This results in the animal butter and olive oil-based food product object of the present invention, which does not require any additional processing and is stored in the refrigerator.

In order to better illustrate the present invention, without however limiting it, the following examples are now provided, which refer to the basic food product (butter:olive oil mixture = 1:1) and to a composition of olive oil butter with additional ingredients added.

### Example 1

Preparation of Composition 1 - base mixture of cow's butter and olive oil 1:1 (w/w) 100 g of cow's butter was taken and reduced into smaller pieces (portions of approximately 10-20 g). After being placed in a sonication tank equipped with a mixer, they were left to soften until the temperature of the butter reached 15-20°C.

100 g of extra virgin olive oil was poured into the sonication tank.

After activating the ultrasound emitters, the mixer was operated at low speed (max 10 rpm). Sonication and mixing were continued until the mixture inside the tank reached 30°C.

After stopping the sonication and mixing, a high-speed booster blender (4000 rpm) was inserted into the tank and operated for a few minutes to act on the entire mixture until a uniform density was obtained.

The resultant homogeneous mixture was removed from the tank and placed in a container for refrigeration at a temperature of 5-6°C if a product with the consistency of butter is desired.

The product must then be stored in the refrigerator.

### Example 2

Preparation of Composition 2 - composed of cow's butter, olive oil, and jam (2:1:2 w/w)

In a container, 40 g of olive oil and 80 g of jam were mixed together using a high-speed mixer (approximately 2500 rpm).

80 g of cow's butter was taken and reduced into smaller pieces (portions of approximately 10 g). The portions of butter and the mixture of olive oil and jam were placed in a sonication tank equipped with a mixer and, after activating the ultrasound emitters, the mixer was operated at low speed (max 10 rpm). Sonication and mixing were continued until the mixture inside the tank reached 29-31°C.

After stopping sonication and mixing, a high-speed booster blender (4000 rpm) was inserted into the tank and operated for a few minutes to act on the entire mixture until a uniform density was obtained.

The homogeneous mixture obtained was removed from the tank and placed in a container for refrigeration at a temperature of 5-6°C if a product with the consistency of butter is desired.

The product must then be stored in the refrigerator.

The following mixtures can also be prepared in a similar manner:
Composition 3

| | |
|---|---|
| Olive oil | 10% |
| Butter | 30% |
| Water | 20% |
| Jam | 39.5% |
| Flavorings | 0.5% |

Composition 4

| | |
|---|---|
| Olive oil | 10% |
| Butter | 30% |
| Water | 20% |
| Sugar | 39% |
| Flavorings | 1% |

Composition 5

| | |
|---|---|
| Olive oil | 49% |
| Butter | 49% |
| Flavorings | 2% |

Composition 6

| | |
|---|---|
| Olive oil | 40% |
| Butter | 55% |
| Lemon juice | 4.7% |
| Table salt | 0.3% |

Composition 7

| | |
|---|---|
| Olive oil | 30% |
| Butter | 50% |
| Lard | 10% |
| Table salt | 0.3% |
| Water and flavorings | 9.7% |

Of course, obvious modifications and/or variations are possible to the above description in terms of dimensions, shapes, materials, components, and connections, as well as in the details of the construction illustrated and the method of operation, without departing from the invention as specified in the following claims.

## Claims

1. A food product based on olive oil and butter of animal origin **characterized in that** it is free from emulsifying, thickening or stabilizing additives.

2. A food product based on olive oil and butter of animal origin according to claim 1 containing additional ingredients selected among water, fruit jam or marmelade, lard, table salt, sugar, lemon juice o juice of other citrus fruits and natural flavorings.

3. A food product based on olive oil and butter of animal origin according to any preceding claims wherein the butter is 30-55% by weight and the olive oil is 10-50% by weight.

4. A food product based on olive oil and butter of animal origin according to any preceding claims wherein the olive oil is extra virgin olive oil.

5. A food product based on olive oil and butter of animal origin according to any preceding claims wherein the butter is butter of cow's milk.

6. A food product based on olive oil and butter of animal origin according to any preceding claims containing a natural food preservative, preferably potassium sorbate.

7. A food product based on olive oil and butter of animal origin according to any preceding claims having one of the following compositions (% w/w):
Composition 1
| | |
|---|---|
| Olive oil | 50% |
| Butter | 50% |
Composition 2
| | |
|---|---|
| Olive oil | 20% |
| Butter | 40% |
| Jam | 40% |
Composition 3
| | |
|---|---|
| Olive oil | 10% |
| Butter | 30% |
| Water | 20% |
| Jam | 39,5% |
| Flavorings | 0,5% |
Composition 4
| | |
|---|---|
| Olive oil | 10% |
| Butter | 30% |
| Water | 20% |
| Sugar | 39% |
| Flavorings | 1% |
Composition 5
| | |
|---|---|
| Olive oil | 49% |
| Butter | 49% |
| Flavorings | 2% |
Composition 6
| | |
|---|---|
| Olive oil | 40% |
| Butter | 55% |
| Lemon juice | 4,7% |
| Table salt | 0,3% |
Composition 7
| | |
|---|---|
| Olive oil | 30% |
| Butter | 50% |
| Lard | 10% |
| Table salt | 0,3% |
| Water and flavorings | 9,7% |

8. A process for the preparation of a food product based on olive oil and butter of animal origin **characterized by** the simultaneous sonication and mixing of the components, followed by homogenization of the resultant mixture.

9. A process according to claim 8, wherein the simultaneous sonication and mixing is carried out up to obtaining a mixture temperature of about 30°C.

10. A process according to claim 8 or 9, wherein the sonication is carried out with ultrasound emitters at 40khz frequency and 60Watt power.
